# FASCICULE DE BREVET EUROPEEN

(11) **EP 1 622 458 B1**
(45) Date de publication et mention de la délivrance du brevet: **19.08.2009**
(21) Numéro de dépôt: 04742673.9
(22) Date de dépôt: 07.05.2004
(51) Int. Cl.: A21D 8/08, A21C 15/00

(54) **PROCEDE DE FABRICATION DE PRODUITS ALIMENTAIRES SOUS FORME DE FEUILLE**
VERFAHREN ZUR HERSTELLUNG VON BLATTFÖRMIGEN NAHRUNGSMITTELN
METHOD OF PRODUCING FOOD PRODUCTS IN SHEET FORM

(30) Priorité: 09.05.2003 FR 0305654
(43) Date de publication de la demande: 08.02.2006
(73) Titulaire: Castro, Mylène, 95350 Saint Brice-sous-Forêt (FR)
(72) Inventeur: Castro, Mylène, 95350 Saint Brice-sous-Forêt (FR)
(74) Mandataire: Laget, Jean-Loup
(86) Numéro de dépôt international: PCT/FR2004/001115
(87) Numéro de publication internationale: WO 2004/100672

(56) Documents cités:
- WO-A-03/024253
- US-A- 3 339 335
- US-A- 3 397 065
- US-A- 3 993 788
- US-A- 4 280 402
- US-A- 5 118 515
- US-A- 5 123 261
- US-A- 5 254 353

## Description

La présente invention concerne un procédé de fabrication de produits alimentaires sous forme de feuille tels que des feuilles de brick, des galettes, des crêpes et similaires.

Les produits alimentaires sous forme de feuilles tels que les feuilles de brick sont fabriqués de manière semi-industrielle, la pâte étant distribuée sur une ou plusieurs crêpières puis la feuille de pâte ainsi cuite est récupérée en vue de son conditionnement sous sachet.

Les feuilles ainsi cuites sur des crêpières ne sont généralement cuites que sur une face qui présente alors un aspect lisse, sec tandis que l'autre face est molle, humide et collante. De ce fait, un simple empilage desdites feuilles conduit au collage des feuilles les unes avec les autres. Ceci rend difficile, voire quasiment impossible, l'utilisation ultérieure de ces feuilles.

De manière à éviter ces désagréments, les procédés classiques pour l'emballage des feuilles de brick prévoient la mise en place d'un intercalaire sulfurisé pour chaque feuille de brick. Cet intercalaire permet donc d'obtenir un conditionnement des feuilles qui évite leur agglomération et qui améliore également la conservation des feuilles.

Cependant, la mise en place d'un tel intercalaire pour chaque feuille d'une pile de 10 feuilles présente de nombreux inconvénients tant du point de vue technique que du point de vue économique.

Ainsi, la mise en place des intercalaires ne peut se faire de manière automatique et nécessite un poste manuel à la sortie du poste de cuisson, ce qui limite les cadences.

De plus, l'intercalaire représente un coût équivalent à celui des ingrédients entrant dans la formulation du produit et la présence desdits intercalaires qui sont quelque peu adhérents au produit complique l'utilisation de celui-ci par le consommateur
ou en restauration et en industrie.

Enfin, dans le cas des feuilles de brick, il est nécessaire après empilage desdites feuilles de leur faire subir un refroidissement progressif en deux temps. D'abord une phase de maturation d'environ 12 heures à température ambiante, cette phase de maturation permet un rééquilibrage de l'humidité entre les deux faces de la feuille afin d'obtenir un produit homogène. Puis, une étape de refroidissement en chambre froide permet de stabiliser la qualité du produit en particulier sur le plan bactériologique et en terme de fonctionnalité.

Par conséquent, la présente invention se propose de pallier ces inconvénients en proposant de conditionner des produits alimentaires sous forme de feuilles tels que des feuilles de brick, en pile sans intercalaire et de manière automatique, plus économique tout en offrant un produit de qualité.

A cet effet, l'invention a pour objet un procédé de fabrication de produits alimentaires sous forme de feuilles, tels que des feuilles de brick, des galettes, des crêpes et similaires, tel que défini dans la revendication 1. Selon une variante, le produit alimentaire est choisi dans la famille des diholosides tels que le maltose, le cellobiose, le tréhalose.

Ainsi de manière avantageuse, la barrière formée sur l'une ou les deux faces de la feuille diminue de manière suffisante ou même fait disparaître le caractère collant de la feuille pour autoriser l'empilage des feuilles directement l'une sur l'autre sans intercalaire et sans risque de collage.

Dans la réalisation de l'invention, l'étape de traitement d'au moins l'une des faces de la feuille peut consister à un séchage. Ce séchage peut avantageusement être réalisé par étuvage et/ou par refroidissement. Ainsi, les feuilles recueillies à la sortie du poste de cuisson peuvent par exemple être déposées sur un tapis roulant qui les emmène vers le poste d'empilage, le tapis roulant traversant alors un tunnel de séchage. Les températures d'étuvage et/ou de refroidissement sont choisies de manière appropriée pour former d'une part la barrière capteur d'humidité sur au moins l'une des faces mais d'autre part préserver les qualités de la feuille telles que la souplesse, le caractère moelleux, le goût, par exemple en rééquilibrant l'humidité entre les deux faces de la feuille.

Ainsi, une installation pour la fabrication de produits alimentaires sous forme de feuilles tels que des feuilles de brick, des galettes, des crêpes et similaires, peut comporter un poste de préparation et, éventuellement de repos, de la pâte, un ou plusieurs postes de cuisson, sous forme de feuilles et sur une seule face, de la pâte amenée depuis le poste de préparation vers lesdits postes de cuisson par des moyens de distribution, des moyens de récupération des feuilles et un poste d'empilage desdites feuilles, et qui comporte en outre, entre le poste de cuisson et le poste d'empilage, un tunnel de séchage traversé par les feuilles.

Tous autres moyens de séchage d'au moins l'une des faces de la feuille sont également appropriés.

On a proposé que l'étape de traitement d'au moins l'une des faces de la feuille consiste à déposer sur celle(s)-ci un ingrédient alimentaire pulvérulent formant sur la ou lesdites faces un « film » empêchant la migration de l'humidité vers l'extérieur de la feuille tout en facilitant le rééquilibrage de l'humidité entre les deux faces et réduisant le caractère collant de ladite ou desdites faces (voir par example le brevet US-5 118 515).

On peut, par example, choisir en tant qu'ingrédient alimentaire rapporté des produits amylacés tels que la fécule de pomme de terre, l'amidon de blé, et analogues.

Selon une première forme de réalisation de l'invention, cet ingrédient alimentaire peut être choisi parmi les fibres végétales telles que les fibres de citron, les fibres de blé, les fibres internes de pois, les fibres d'avoine et analogues.

Selon une deuxième forme de réalisation de l'invention, cet ingrédient alimentaire peut être choisi parmi la famille des diholosides tels que le maltose, le cellobiose, le tréhalose.

De préférence, l'ingrédient pulvérulent est déposé sur la face cuite d'une feuille de brick.

De manière surprenante, on a remarqué que les feuilles de brick traitées selon le procédé de l'invention n'avaient plus besoin de subir la phase de maturation d'une douzaine d'heures qui était auparavant indispensable et qu'il est en outre possible de conditionner immédiatement les feuilles en pile, celles-ci refroidissant dans leur emballage.

Le procédé selon l'invention permet donc de manière avantageuse une réduction du temps de fabrication et donc une productivité plus grande.

L'invention vise également une installation pour la fabrication de produits alimentaires sous forme de feuilles tels que des feuilles de brick, des galettes, des crêpes et similaires, comportant un poste de préparation et, éventuellement de repos, de la pâte, un ou plusieurs postes de cuisson, sous forme de feuilles et sur une seule face, de la pâte amenée depuis le poste de préparation vers lesdits postes de cuisson par des moyens de distribution, des moyens de récupération des feuilles et un poste d'empilage desdites feuilles, **caractérisée en ce qu**'elle comporte en outre entre le poste de cuisson et le poste d'empilage, un poste de saupoudrage d'au moins l'une des faces des feuilles.

Ainsi de manière avantageuse, le procédé de l'invention peut être mis en oeuvre sur des installations déjà existantes car il suffit de modifier la sortie du poste de cuisson en adaptant un poste de saupoudrage. Par ailleurs, la suppression des intercalaires permet d'envisager une automatisation du poste d'empilage des feuilles.

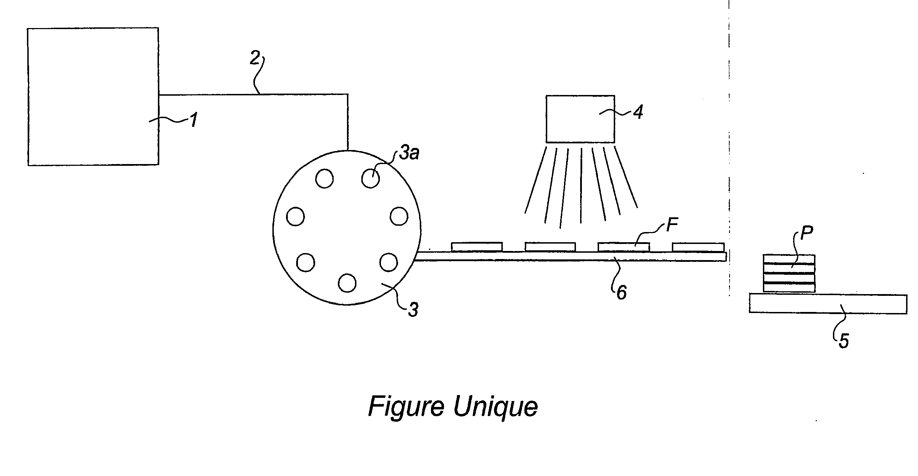

On décrira maintenant l'invention plus en détail en référence au dessin dans lequel la figure unique représente de manière schématique les différents postes de l'installation de mise en oeuvre du procédé selon le second mode de réalisation de l'invention.

L'installation pour préparer des feuilles de brick représentée de manière schématique dans la figure unique comporte un poste de préparation et éventuellement de repos de la pâte 1, des moyens de distribution 2 de la pâte vers un poste de cuisson 3, un poste de saupoudrage 4 et un poste d'empilage 5.

Au poste de préparation de la pâte 1, on mélange dans une cuve les différents ingrédients (farine, eau, ingrédients technologiques) nécessaires à la fabrication de la pâte pour feuilles de brick, puis on laisse éventuellement reposer la pâte de 0 à 120 minutes.

Le poste de cuisson 3 étant constitué d'une crêpière rotative présentant un plan incliné, et munie d'une douzaine de plaques 3a, la pâte doit être préparée de manière à présenter une consistance adaptée à une cuisson sur plaque inclinée. Ainsi la pâte préparée doit être suffisamment fluide pour s'étaler convenablement sur la plaque de cuisson mais suffisamment épaisse pour s'y maintenir sans couler, sachant que la plaque est oblique et tournée vers le bas.

Des moyens de distribution 2 amènent la pâte aux différents postes de cuisson, un seul poste est représenté sur la figure pour des raisons de clarté.

La pâte est déposée sur chaque plaque de cuisson 3a dont la température est régulée entre 110 et 200°C. Le temps de cuisson correspond au temps de rotation de la crêpière et à la fin de la cuisson la feuille de brick F est décollée de son support et tombe sur un tapis de convoyage 6 tel qu'un tapis de mailles, sa face non cuite contre le tapis, pour être transportée vers le poste d'empilage 5.

Le poste de saupoudrage 4 est positionné au-dessus dudit tapis 6 et libère de préférence l'ingrédient pulvérulent sur la face cuite de chaque feuille de brick F portée par ledit tapis 6.

Une fois la feuille de brick F recouverte de l'ingrédient pulvérulent, celle-ci arrive au poste d'empilage où on forme les piles P de feuilles de brick. Chaque pile P comporte généralement 10 feuilles de brick. Chaque pile P est alors entraînée vers le poste de conditionnement où elle est mise sous emballage.

## Revendications

1. Procédé de fabrication de produits alimentaires sous forme de feuilles, tels que des feuilles de brick, des galettes, des crêpes et similaires, comprenant les étapes de :
préparation de la pâte,
éventuellement de repos de ladite pâte,
distribution de la pâte à des postes de cuisson où la pâte est déposée pour former des feuilles et est cuite,
récupération des feuilles, et
empilage desdites feuilles avant refroidissement et emballage,
ledit procédé comportant, en outre, en sortie du poste de cuisson et avant empilage, une étape de traitement d'au moins l'une des faces de la feuille,
consistant à rapporter sur celle(s)-ci un produit alimentaire pulvérulent formant sur
cette ou ces faces un « film » prévenant la migration de l'humidité vers l'extérieur
de la feuille, facilitant le rééquilibrage de l'humidité entre les deux faces, et
diminuant ainsi le caractère collant de la feuille, l'empilage des feuilles étant ainsi
réalisable sans intercalaire,
**caractérisé en ce que** les feuilles sont cuites sur une seule face, et le produit alimentaire rapporté est choisi parmi les fibres végétales telles que les fibres de citron, les fibres de blé, les fibres internes de pois, les fibres d'avoine.

2. Procédé de fabrication de produits alimentaires sous forme de feuilles, tels que des feuilles de brick, des galettes, des crêpes et similaires, comprenant les étapes de:
préparation de la pâte,
éventuellement de repos de ladite pâte,
distribution de la pâte à des postes de cuisson où la pâte est déposée pour former des feuilles et est cuite,
récupération des feuilles, et
empilage desdites feuilles avant refroidissement et emballage,
ledit procédé comportant, en outre, en sortie du poste de cuisson et avant empilage, une étape de traitement d'au moins l'une des faces de la feuille, consistant à rapporter sur celle(s)-ci un produit alimentaire pulvérulent, formant sur cette ou ces faces un « film » prévenant la migration de l'humidité vers l'extérieur de la feuille et facilitant le rééquilibrage de l'humidité entre les deux faces et diminuant ainsi le caractère collant de la feuille, l'empilage des feuilles étant ainsi réalisé sans intercalaire,
**caractérisé en ce que** les feuilles sont cuites sur une seule face, et le produit alimentaire rapporté est choisi dans la famille des diholosides tels que le maltose, le cellobiose, le tréhalose.

## Claims

1. Method for producing food products in sheet form, such as filo-type pastries, pancakes, crepes and the like, comprising the steps of:
preparing the dough,
optionally allowing the dough to rest,
distributing the dough to baking stations where the dough is deposited in order to form sheets and is baked,
retrieving the sheets, and
stacking the sheets before cooling and packaging,
the method further comprising, when leaving the baking station and before stacking, a step for processing at least one of the faces of the sheet involving adding to the face(s) a powdered food product which forms on the faces(s) a "film" which prevents moisture from travelling towards to the outer side of the sheet, facilitating the restoration of equilibrium of moisture between the two faces, and which thus reduces the adhesive nature of the sheet, the sheets thus being stacked without any insert,
**characterised in that** the sheets are baked only on one face, and the food product added is selected from plant fibres, such as lemon fibres, wheat fibres, internal fibres of peas, oat fibres.

2. Method for producing food products in sheet form, such as filo-type pastries, pancakes, crepes and the like, comprising the steps of:
preparing the dough,
optionally allowing the dough to rest,
distributing the dough to baking stations where the dough is deposited in order to form sheets and is baked,
retrieving the sheets, and
stacking the sheets before cooling and packaging,
the method further comprising, when leaving the baking station and before stacking, a step for processing at least one of the faces of the sheet involving adding to the face(s) a powdered food product which forms on the faces(s) a "film" which prevents moisture from travelling towards the outer side of the sheet and
which facilitates the restoration of equilibrium of moisture between the two faces and thus reduces the adhesive nature of the sheet, the sheets thus being stacked without any insert,
**characterised in that** the sheets are baked only on one face and the food product added is selected from the family of disaccharides, such as maltose, cellobiose, trehalose.

## Patentansprüche

1. Verfahren zur Herstellung von blattförmigen Nahrungsmitteln wie Brick-Teigblättern, Pfannkuchen, Crêpes und dergleichen, umfassend die Schritte:
der Zubereitung des Teiges,
gegebenenfalls des Ruhenlassens des Teiges,
der Verteilung des Teiges zu Backstationen, wo der Teig aufgetragen wird, um Blätter zu bilden, und gebacken wird, des Abnehmens der Blätter und
des Stapelns dieser Blätter vor dem Abkühlen und Verpacken,
wobei das Verfahren darüber hinaus im Ausgang der Backstation und vor dem Stapeln einen Schritt zur Behandlung von mindestens einer der Seiten des Blattes umfasst, der darin besteht, auf diese ein pulverförmiges Nahrungsmittel aufzutragen, das auf dieser Seite bzw. diesen Seiten einen "Film" bildet, welcher dem Wandern der Feuchtigkeit zur Außenseite des Blattes hin vorbeugt und eine ausgeglichene Feuchtigkeitsverteilung zwischen den beiden Seiten erleichtert und **dadurch** die Klebrigkeit des Blattes vermindert, weshalb das Stapeln der Blätter ohne Zwischenlage ausgeführt werden kann,
**dadurch gekennzeichnet, dass** die Blätter auf einer einzigen Seite gebacken werden und dass das aufgetragene Nahrungsmittel unter den pflanzlichen Fasern wie Zitronenfasern, Weizenfasern, inneren Erbsenfasern, Haferfasern gewählt wird.

2. Verfahren zur Herstellung von blattförmigen Nahrungsmitteln wie Brick-Teigblättern, Pfannkuchen, Crêpes und dergleichen, umfassend die Schritte:
der Zubereitung des Teiges,
gegebenenfalls des Ruhenlassens des Teiges,
der Verteilung des Teiges zu Backstationen, wo der Teig aufgetragen wird, um Blätter zu bilden, und gebacken wird, des Abnehmens der Blätter und
des Stapelns dieser Blätter vor dem Abkühlen und Verpacken,
wobei das Verfahren darüber hinaus im Ausgang der Backstation und vor dem Stapeln einen Schritt zur Behandlung von mindestens einer der Seiten des Blattes umfasst, der darin besteht, auf diese ein pulverförmiges Nahrungsmittel aufzutragen, das auf dieser Seite bzw. diesen Seiten einen "Film" bildet, welcher dem Wandern der Feuchtigkeit zur Außenseite des Blattes hin vorbeugt und eine ausgeglichene Feuchtigkeitsverteilung zwischen den beiden Seiten erleichtert und **dadurch** die Klebrigkeit des Blattes vermindert, weshalb das Stapeln der Blätter ohne Zwischenlage ausgeführt wird,
**dadurch gekennzeichnet, dass** die Blätter auf einer einzigen Seite gebacken werden und dass das aufgetragene Nahrungsmittel unter den Disacchariden wie Maltose, Cellobiose, Trehalose ausgewählt wird.
